# EUROPÄISCHE PATENTANMELDUNG

(11) **EP 2 383 043 A2**
(43) Veröffentlichungstag der Anmeldung: **02.11.2011**
(21) Anmeldenummer: 11003364.4
(22) Anmeldetag: 21.04.2011
(51) Int. Cl.: B05B 7/04, B05B 7/12

(54) **Sprühpistole für das Aufbringen von 2-komponentigen Medien und Verwendung der erfindungsgemäßen Sprühpistole zur Aufbringung von Klebstoffen**

(30) Priorität: 28.04.2010 DE 102010018660
(71) Anmelder: Wakol GmbH, 66954 Pirmasens (DE)
(72) Erfinder: Hillert, Götz, 66954 Pirmasens (DE); Schäfer, Martin, 76829 Godramstein (DE); Melka, Alfred, Charlotte NC, 28277 (US)
(74) Vertreter: Geitz Truckenmüller Lucht

(57) **Zusammenfassung**

Die Erfindung betrifft eine Sprühpistole für das Aufbringen von 2-komponentigen Medien, mit einem Pistolengehäuse (1), mit einer Auftragsdüse (2) an dem Pistolengehäuse (1), mit einem Mischsystem (3) in dem Pistolengehäuse zur Vermengung der Komponenten, mit einem Materialkanal (6) in dem Pistolengehäuse (1) zur Leitung der ersten Komponente in das Mischsystem (3), mit einer im Pistolengehäuse (1) entlang ihrer Längsachse verschiebbar geführten Schließnadel (7), mit mindestens einem Reaktandenkanal (8) der Schließnadel (7) zur Leitung der zweiten Komponente in das Mischsystem (3) und/ oder in den Materialkanal (6), mit mindestens einer abseits der Längsachse der Schließnadel angeordneten Auslassöffnung (9) des Reaktandenkanals (8) zur Entlassung der zweiten Komponente aus dem Reaktandenkanal (8), mit mindestens einer Bedieneinrichtung an der Sprühpistole zur Verschiebung der Schließnadel (7) im Pistolengehäuse (1), mit mindestens einer Dosiereinrichtung an der Sprühpistole zur Änderung des Öffnungsquerschnitts der mindestens einen Auslassöffnung (9) der Schließnadel (7) durch Führung der Schließnadel (7) entlang einer ortsfest in dem Gehäuse (1) angeordneten Abdeckung beim Verschieben der Schließnadel (7). Ein weiterer Gegenstand der vorliegenden Erfindung ist die Verwendung der erfindungsgemäßen Sprühpistole zur Aufbringung von Klebstoffen.

## Beschreibung

### Stand der Technik

Die Erfindung basiert auf einer Sprühpistole für das Aufbringen von 2-komponentigen Medien mit einem Mischsystem in dem Pistolengehäuse zur Vermengung der Komponenten.

Sprühbare Medien wie Beschichtungen, Dichtmittel, Farben oder Klebstoffe basieren häufig auf organischen Lösungsmitteln. Die Lösungsmittel werden benötigt, um dem Medium eine geeignete Viskosität zu verleihen, die ein Aufsprühen des Mediums ermöglicht. Oftmals werden Lösungsmittel mit einem tiefen Siedepunkt eingesetzt um ein schnelles Trocknen zu erreichen. Dadurch werden gesundheitsschädliche Lösungsmittel, wie beispielsweise Toluol, Cycloalkane oder Ethylacetat, beim Trocknen des Mediums an die Umgebungsluft abgegeben.

Aus ökologischen und gesundheitlichen Aspekten besteht daher zunehmend Bedarf an Medien auf Wasserbasis. Insbesondere 2-komponentige Medien auf Basis einer wässrigen Dispersion, bei denen ein Beschichtungs- oder ein Klebstoffmedium durch den Einsatz eines Aktivators oder Katalysators chemisch verändert wird, erfüllen je nach Anwendungsgebiet die unterschiedlichsten Anforderungen. Der Aktivator oder Katalysator wird hierbei zu dem Medium hinzugefügt und bewirkt beispielsweise eine Aktivierung oder eine Härtung.

Im Bereich der Klebetechnik ist eine möglichst hohe Anfangsklebekraft unmittelbar nach dem Applizieren des Klebstoffs gefordert. Diese Anforderung erfüllen insbesondere scherempfindliche wasserbasierte Klebstoffe auf Basis von Polymerdispersionen. Eine besonders geeignete Klasse wässriger Polymerdispersionen stellen hier die Chloroprendispersionen dar. In diesen Dispersionen sind die dispergierten Polymerpartikel in einem pH Bereich von ca. pH 12 durch anionische Harzseifen wie beispielsweise Abietinsäure stabilisiert. Die Stabilisierung erfolgt aufgrund von elektrostatischen Ladungsträgern in Form von negativ geladenen Carboxylatgruppen der Harzseifen. Die Carboxylatgruppen dieses Emulgatorsystem werden durch Herabsetzen des pH-Wertes auf pH 8,5 - 9,5 protoniert und damit die Dispersion soweit destabilisiert, dass geringe mechanische Scherkräfte ausreichen um die Dispersion zu brechen. Das Absenken des pH-Wertes erfolgt über die Zugabe eines Aktivators, bei dem es sich meist um eine Säure wie z.B. Citronensäure oder Kohlensäure in Form von gasförmigem CO₂ handelt. Hierdurch wird eine möglichst schnelle Anfangshaftung bewirkt, die durch reines Verdunsten des Wassers in der Klebstoffformulierung nicht erreicht wird. Dies kann in der Praxis genutzt werden, in dem z.B. durch einen Sprühauftrag die destabilisierte Dispersion so stark geschert wird, dass sie beim Auftreffen auf das Substrat bricht, dadurch größere klebrige Koagulatpartikel bildet und hierdurch bereits ohne weitere Verdunstung von Wasser einen klebewirksamen Film an der Substratoberfläche bildet.

Die Scherempfindlichkeit birgt jedoch die Problematik, dass die instabilisierten Klebstoffe nur sehr vorsichtig in einer Sprühpistole gefördert werden können, um ein Koagulieren des Klebstoffs in der Sprühpistole zu vermeiden. Zudem weist eine Reihe von instabilisierten Klebstoffen eine geringe Topfzeit auf, die es nicht erlaubt, die Sprühpistole leicht zu reinigen, nachdem der Klebstoff durch den Katalysator aktiviert wurde. Hierdurch ist mit einem schnellen Verkleben der Auftragsdüsen und damit der Unbrauchbarkeit der Sprühpistole zu rechnen.

Bisher wurde versucht, dieser Problematik vorwiegend dadurch zu begegnen, dass die Klebstoffe im stabilisierten Zustand gelagert, transportiert und in der Sprühpistole gefördert werden. Die Zugabe des Katalysators erfolgt dann beim Sprühvorgang außerhalb der Sprühpistole zum Sprühstrahl, erst kurz vor dem Auftreffen des Klebstoffs auf dem Substrat. Die Nachteile hierbei sind, dass zum einen die Zugabe des Katalysators wenig kontrolliert erfolgt und sich daher in der Umgebungsluft beziehungsweise im Overspray noch freier Katalysator befindet. Dies kann sowohl aus umwelt- und gesundheitstechnischen als auch aus ökonomischen Gründen bedenklich sein. Darüber hinaus muss immer noch mit einem Verkleben der Düsenspitze gerechnet werden.

Der Erfindung liegt die Aufgabe zugrunde, eine Sprühpistole zur Verfügung zu stellen, die die oben genannten Nachteile überwindet und mit der die Zugabe eines Aktivators, eines Katalysators oder eines anderen flüssigen oder gasförmigen Fluids in einer kontrollierten Weise erfolgt.

### Die Erfindung und ihre Vorteile

Die Aufgabe wird durch die erfindungsgemäße Sprühpistole gemäß Anspruch 1 gelöst. Hierzu ist die Sprühpistole, die ein Pistolengehäuse, eine Auftragsdüse an dem Pistolengehäuse und ein Mischsystem zur Vermengung der beiden Komponenten eines 2-komponentigen Mediums enthält, mit einem Materialkanal in dem Pistolengehäuse zur Leitung der ersten Komponente in das Mischsystem ausgestattet. Der Materialkanal kann über ein in der Sprühpistole oder außerhalb der Sprühpistole gelegenes Reservoir gespeist werden. Als Reservoire kommen Kartuschen, die in das Pistolengehäuse eingesetzt sind in Frage. Aber auch Behälter, die an dem Pistolengehäuse angeordnet sind, kommen zur Anwendung. Das Reservoir ist in der Regel lösbar mit den weiteren Bauteilen der Sprühpistole verbunden. Dieses kann über Leitungen wie beispielsweise Schläuche, Rohre oder Kanäle im Gehäuse mit dem Materialkanal verbunden sein. Die Förderung der ersten Komponente kann durch Beaufschlagung mit Druck über ein manuell, elektrisch, hydraulisch oder pneumatisch betriebenes System erfolgen.

Zudem ist die Sprühpistole im Pistolengehäuse mit einer entlang Ihrer Längsachse verschiebbar geführten Schließnadel ausgestattet, die mindestens einen Reaktandenkanal zur Leitung der zweiten Komponente in das Mischsystem und/ oder in den Materialkanal und mindestens eine abseits der Längsachse der Schließnadel angeordneten Auslassöffnung des Reaktandenkanals zur Entlassung der zweiten Komponente aus dem Reaktandenkanal aufweist. Das bedeutet, der mindestens eine Reaktandenkanal mündet in die mindestens eine Auslassöffnung, die quer zur Längsachse verläuft und die die zweite Komponente umfangsseitig aus der Schließnadel entlässt. Der Reaktandenkanal verläuft zumindest abschnittsweise nicht parallel zur Längsachse. Die mindestens eine Auslassöffnung liegt damit außerhalb der Längsachse der Schließnadel. Üblicherweise wird der Reaktandenkanal durch einen Vorrat mit der zweiten Komponente gespeist. Die zweite Komponente kann zur Förderung durch eine Druckbeaufschlagungseinrichtung mit Druck beaufschlagt sein. Handelt es sich bei der zweiten Komponente um ein gasförmiges Fluid, so kann es sich bei dem Vorrat um einen mit Druck beaufschlagten Behälter handeln. Der Vorrat kann über Leitungen, wie Rohre, Schläuche oder Kanäle in dem Gehäuse mit dem Reaktandenkanal verbunden sein. Die Auslassöffnung kann unterschiedliche Formen, darunter auch die Form eines Langlochs, aufweisen. Es ist möglich, dass zwei oder mehrere Auslassöffnungen an der Schließnadel angeordnet sind. Diese können sich beispielsweise über einen die Schließnadel radial umlaufenden Bereich erstrecken. Jedoch ist es ebenfalls denkbar, dass sich die Auslassöffnungen auf einen Bereich von einem Drittel bis auf die Hälfte des Umfangs der Schließnadel erstrecken.

Mindestens eine Bedieneinrichtung an der Sprühpistole dient zur Verschiebung der Schließnadel im Pistolengehäuse. Beispiele für eine manuelle Bedieneinrichtung sind Schalter, Taster, Knöpfe, Sensoren oder der Abzugshebel der Sprühpistole. Bei einem Verschieben der Schließnadel über die Betätigung der Bedieneinrichtung kann die Verschubstrecke der Schließnadel beispielsweise linear an den Druckweg eines Schalters oder den Schwenkweg eines Abzugshebel gekoppelt sein. Es ist auch möglich, die Bedieneinrichtung automatisch zu betätigen, beispielsweise über eine elektronische Steuerung. Dies kann insbesondere dann gewünscht sein, wenn die Sprühpistole mit einer automatisierten Anlage zum Auftragen des 2-komponentigen Mediums verbunden ist.

Mindestens eine Dosiereinrichtung an der Sprühpistole ist zur Änderung des Öffnungsquerschnitts der mindestens einen Auslassöffnung der Schließnadel durch Führung der Schließnadel entlang einer ortsfest in dem Gehäuse angeordneten Abdeckung beim Verschieben der Schließnadel vorgesehen. Hierbei kann es sich beispielsweise um ein plattenartiges Bauteil handeln. Auch kann die Abdeckung mehrere einzelne Abdeckelemente umfassen, die ortsfest in dem Gehäuse angeordnet sind. Diese können wiederum mehreren Auslassöffnungen zugeordnet sein. Vorteilhaft ist jedoch eine Abdeckung in Form eines Hohlzylinders, welcher die Schließnadel gegebenenfalls vollumfänglich umgibt und die Schließnadel entlang ihrer Längsachse teilweise bedeckt. Durch das Zusammenwirken von Auslassöffnung und Abdeckung werden die Abmessungen der mindestens einen Auslassöffnung verändert. Damit kann das dem Materialkanal und/ oder dem Mischsystem zugeführte Volumen an der zweiten Komponente reguliert werden. Dies ist auch dahingehend besonders vorteilhaft, dass ein Vormischen einer größeren Menge an 2-komponentigem Medium, als bei einem Sprühvorgang tatsächlich benötigt wird, vermieden wird.

Nach einer vorteilhaften Ausgestaltung der Erfindung handelt es sich bei dem Mischsystem um einen Statikmischer. Der Statikmischer kann aus Metall, Kunststoff oder weiteren Materialien bestehen. Der statische Mischer besteht in der Regel aus einem Mischrohr mit in diesem unbeweglich angeordneten Mischelementen zur Vermengung der beiden Komponenten zu einer homogenen Masse. Die Mischelemente können im Inneren des Rohrkörpers des Mischers als Gewindegang fortlaufend wendelartig außen an einer zylinderförmigen Wandung entlang in einer Schraubenlinie verlaufen. Anstelle des Mischrohres können auch Teile des Pistolengehäuses die Mischelemente umgeben. Durch ein Durchführen der beiden Komponenten über das Gewinde des Statikmischers wird eine intensive Vermischung der zu mischenden Komponenten bewirkt.

Nach einer weiteren vorteilhaften Ausgestaltung der Erfindung weist das Mischsystem die Abdeckung auf. Insbesondere bei einem statischen Mischer mit einem zylinderförmigen Element, auf dessen Außenseite ein Gewinde angeordnet ist, ist es vorteilhaft, wenn das zylinderförmige Element als Hohlzylinder ausgebildet ist und die Längsachse der Schließnadel teilweise abdeckt.

Nach einer weiteren vorteilhaften Ausgestaltung der Erfindung weist die Schließnadel einen Abschnitt mit einem Sitzbereich zum Eingriff in einen als Nadelsitz ausgebildeten Abschnitt der Auftragsdüse auf. Im Sitzbereich sind die Geometrien der Schließnadel und des Nadelsitzes zumindest teilweise formmäßig aneinander angepasst. Der Nadelsitz kann hierbei zumindest in Teilen hohlzylindrisch ausgebildet sein. Auch ein konischer, sich zur Öffnung der Auftragsdüse hin verjüngender Nadelsitz sowie ein buchsenförmiger oder konkav geformter Nadelsitz sind denkbar. Der Sitzbereich der Schließnadel ist dementsprechend zumindest in Teilen als zylindrischer Stößel, insbesondere als Kreiszylinder, ausgebildet, oder zeigt konvexe, beispielsweise schalen- oder kugelförmige, beziehungsweise konische Ausbildungen. Durch eine genaue Passung wird eine sehr gute Dichtwirkung erzielt. Die Dichtwirkung kann durch ein geeignetes Dichtungsmaterial an den Grenzflächen des Nadelsitzes und des Sitzbereiches noch verbessert sein. Die Schließnadel ist im Sitzbereich frei von Auslassöffnungen. Die Schließnadel ist an ihrem, zur Auftragsdüse gerichteten Ende, geschlossen. Werden Sitzbereich der Schließnadel und Nadelsitz der Auftragsdüse miteinander in Eingriff gebracht, ist die Öffnung der Auftragsdüse folglich verschlossen, es findet kein Materialaustrag aus der Sprühpistole statt. Bei einer Schließnadel mit 10 cm Gesamtlänge kann der den Sitzbereich enthaltende Abschnitt zwischen 1 cm und 3 cm lang sein, bevorzugt zwischen 1,7 und 2,3 cm, besonders bevorzugt 2 cm. Sitzbereich und Nadelsitz können jeweils Dimensionen ab 1 mm Länge aufweisen. Die mindestens eine Auslassöffnung befindet sich in einem zweiten Abschnitt der Schließnadel, der sich unmittelbar oder mittelbar an den Abschnitt mit Sitzbereich anschließt. Der zweite Abschnitt einer Schließnadel mit einer Gesamtlänge von 10 cm kann zwischen 7 und 9 cm lang sein, bevorzugt zwischen 7,7 und 8,3 cm, besonders bevorzugt 8 cm. Bei einer bevorzugten Ausgestaltung ist die mindestens eine Auslassöffnung direkt benachbart zum ersten, den Sitzbereich aufweisenden Abschnitt angeordnet.

Nach einer weiteren vorteilhaften Ausgestaltung der Erfindung weist die Schließnadel mindestens eine Ruheposition auf, in der der Sitzbereich der Schließnadel in den Nadelsitz der Auftragsdüse eingreift und die Auslassöffnung des Reaktandenkanals durch die Abdeckung vollständig abgedeckt ist. Ist die Sprühpistole mit einer manuellen Bedieneinrichtung ausgestattet, so befindet sich die Bedieneinrichtung in ihrer Ausgangsstellung. Bei einer automatischen Bedieneinrichtung befindet sich diese analog in einem Ausgangszustand. In diese Ausgangsstellung kann die manuelle Bedieneinrichtung nach Freigabe dieser durch den Benutzer beispielsweise nach Beendigung eines Sprühvorgangs zurückspringen. Durch Rückstellkräfte eines entsprechenden Mechanismus wird die Schließnadel hierbei ebenfalls wieder in die Ruheposition gebracht.

Nach einer weiteren vorteilhaften Ausgestaltung der Erfindung weist die Schließnadel mindestens eine Reinigungsposition auf, in der der Sitzbereich der Schließnadel aus dem Nadelsitz herausbewegt ist und die mindestens eine Auslassöffnung durch die Abdeckung vollständig abgedeckt ist. Mit Betätigung der Bedieneinrichtung wird der Sitzbereich der Schließnadel aus dem Nadelsitz gezogen. Dadurch strömt die erste Komponente aus dem Materialkanal in das Mischsystem und anschließend über die Auftragsdüse aus der Sprühpistole nach außen. Die Schließnadel wird während diesem Vorgang an der Abdeckung so entlang geführt, dass die mindestens eine Auslassöffnung stets bedeckt ist. Hierbei kann der Weg eines Abzugshebels oder eines Schalters von der Ruheposition bis zu einem Druckpunkt als Schaltweg benutzt werden. In der Reinigungsposition werden die Bauteile der Sprühpistole lediglich von der ersten Komponente durchflossen. Damit wird gewährleistet, dass diese nicht durch das fertige 2-komponentige Medium durchströmt wird, welches aktiviert und im Vergleich zu der ersten Komponente reaktiver ist. Wird die Schließnadel anschließend in die Ruheposition gebracht, so kann die Sprühpistole beispielsweise zwischen zwei Sprühvorgängen abgelegt werden ohne dass ein sofortiges Verstopfen der Bauteile befürchtet werden muss, da alle Bauteile, die bei einem Sprühvorgang von 2-komponentigem Medium durchflossen werden, nur die erste Komponente enthalten. Vorteilhaft dabei ist, dass die erste Komponente hierbei von der Umgebungsluft abgeriegelt wird, so dass die erste Komponente gegebenenfalls auch nicht mit Bestandteilen der Umgebungsluft reagieren kann. Handelt es sich bei der ersten Komponente um ein Material, welches seine Eigenschaften ohne die zweite Komponente nicht oder nur geringfügig ändert, kann die Sprühpistole zwischen den Sprühaufträgen lange Zeit ohne negative Einflüsse auf das Durchlassvermögen der Bauelemente gelagert werden. Besonders vorteilhaft hierbei ist, dass es dadurch nicht notwendig ist, Bauelemente, die bereits bei einem Sprühvorgang eingesetzt wurden, vor einem weiteren Sprühvorgang durch neue, ungebrauchte Teile zu ersetzen.

Nach einer weiteren vorteilhaften Ausgestaltung der Erfindung weist die Schließnadel mindestens eine Arbeitsposition auf, in der der Sitzbereich der Schließnadel durch Verschiebung der Schließnadel aus dem Nadelsitz herausbewegt ist und die Auslassöffnung vollständig oder teilweise von der Abdeckung freigegeben ist. Die Schließnadel wird hierbei um eine weitere Verschiebungsstrecke vom Nadelsitz der Auftragsdüse wegbewegt, als bei der Verschiebung aus der Ruheposition in eine Reinigungsposition. Das Ausmaß der Freigabe der mindestens einen Auslassöffnung ist an die Verschiebungsstrecke der Schließnadel gekoppelt, wobei die Abmessung des Öffnungsquerschnittes der mindestens einen Auslassöffnung mit Vergrößerung des Abstandes zwischen Schließnadel und Nadelsitz üblicherweise zunimmt. Zur Veränderung der Abmessung der mindestens einen Auslassöffnung kann hierbei beispielsweise der Weg eines Abzugshebels oder eines Schalters von einem Druckpunkt bis zu einem Anschlagpunkt als Schaltweg benutzt werden.

Nach einer weiteren vorteilhaften Ausgestaltung der Erfindung ist der Reaktandenkanal durch mindestens eine Absperreinrichtung von einem Vorrat an der zweiten Komponente absperrbar. Hierdurch kann der Durchfluss der zweiten Komponente durch Schläuche gestoppt werden, die den Vorrat mit dem Reaktandenkanal verbinden. Die mindestens eine Absperreinrichtung kann dabei an die Bedieneinrichtung gekoppelt sein. Es ist möglich, das die Absperreinrichtung einen Fluss der zweite Komponente verhindert, bis ein Druckpunkt eines Schalters oder eines Abzugshebels überschritten wird. Wird die Bedieneinrichtung über diesen Punkt bewegt, gibt die Absperreinrichtung den Fluss der zweiten Komponente frei.

Nach einer weiteren vorteilhaften Ausgestaltung der Erfindung handelt es sich bei der Absperreinrichtung um ein Rückschlagventil. Durch das geöffnete Rückschlagventil strömt die zweite Komponente im Reaktandenkanal über die mindestens eine Auslassöffnung in den Materialkanal und/ oder in das Mischsystem.

Ein weiterer Gegenstand der Erfindung ist die Verwendung der erfindungsgemäßen Sprühpistole zur Aufbringung eines als Reaktionsprodukt aus einer ersten und einer zweiten Komponente erhaltenen Klebstoffes. Die Sprühpistole eignet sich besonders gut zum gezielten Auftragen von Klebstoff auf zu verklebende Flächen insbesondere in Handwerksbetrieben und der Industrie. Klebstoffe können in einem Arbeitsgang vollflächig, aber auch streifenweise, schlaufenweise, mäanderförmig oder punktförmig auf ein zu beschichtendes Werkstück aufgebracht werden. Erste und zweite Komponente werden innerhalb der Sprühpistole in dem Mischsystem gemischt und das hierdurch gebildete Medium wird über eine Auftragsdüse auf das Werkstück aufgetragen.

Nach einer vorteilhaften Ausgestaltung der Erfindung wird die erfindungsgemäße Sprühpistole zur Aufbringung von wasserbasierten Klebstoffen verwendet. Selbstverständlich eignet sich die erfindungsgemäße Sprühpistole zur Verwendung auch für andere zu versprühende Medien, die erst bei der Anwendung miteinander vermischt werden sollen oder dürfen. Jedoch ist es insbesondere aus umwelttechnischen und gesundheitlichen Aspekten vorteilhaft, die erfindungsgemäße Sprühpistole zum Auftrag von wasserbasierten Klebstoffen zu verwenden.

Nach einer vorteilhaften Ausgestaltung der Erfindung wird die erfindungsgemäße Sprühpistole zur Aufbringung von wasserbasierten Klebstoffen verwendet, wobei die erste Komponente eine Polychloropren-Dispersion ist. Eine besonders geeignete Klasse wässriger Polymerdispersionen stellen die Chloroprendispersionen dar. In diesen Dispersionen sind die dispergierten Polymerpartikel in einem pH Bereich von ca. pH 12 durch anionische Harzseifen stabilisiert. Dieses Emulgatorsystem kann durch Herabsetzen des pH-Wertes auf pH 8,5 - 9,5 soweit destabilisiert werden, dass geringe mechanische Scherkräfte ausreichen um die Dispersion zu brechen.

Nach einer vorteilhaften Ausgestaltung der Erfindung wird die erfindungsgemäße Sprühpistole zur Aufbringung von Klebstoffen verwendet, wobei die zweite Komponente ein Aktivator ist. Durch die Möglichkeit einer kontrollierten Zudosierung des Aktivators oder eines Katalysators wird eine optimales Mischungsverhältnis an erster und zweiter Komponente erreicht. Es wird dadurch auch verhindert, dass sich beim Sprühvorgang noch freier Aktivator oder Katalysator im Overspray befindet.

Nach einer vorteilhaften Ausgestaltung der Erfindung wird die erfindungsgemäße Sprühpistole zur Aufbringung von Klebstoffen verwendet, wobei die zweite Komponente CO₂ ist. CO₂ kann dabei die Funktion eines Aktivators beziehungsweise eines Katalysators zukommen. Insbesondere bei der Verwendung in Verbindung mit einer wässrigen Polychloropren-Dispersion führt die Zudosierung von CO₂ zu einer Instabilisierung der Dispersion durch pH-Wert-Absenkung und damit zu einem Klebstoff, der mit einer hohen Anfangsklebekraft auf das zu verklebende Werkstück aufgetragen wird.

Nach einer weiteren vorteilhaften Ausgestaltung der Erfindung wird die erfindungsgemäße Sprühpistole zur Verklebung von Schaumstoffen in der Matratzen- und Möbel-/Polsterverklebung verwendet.

Weitere Vorteile und vorteilhafte Ausgestaltungen der Erfindung sind der nachfolgenden Beschreibung, der Zeichnung und den Ansprüchen zu entnehmen.

### Zeichnung

In der Zeichnung ist ein Ausgestaltungsbeispiel der erfindungsgemäßen Sprühpistole dargestellt. Es zeigt:
- Figur 1:: schematischer Längsschnitt durch den die Auftragsdüse und die Schließnadel aufweisenden Teil einer Sprühpistole in Ruheposition, wobei die Schließnadel in einer Seitenansicht dargestellt ist,
- Figur 2:: schematischer Längsschnitt durch die Sprühpistole gemäß Figur 1 in Arbeitsposition, wobei die Schließnadel im Längsschnitt gezeigt ist.

### Beschreibung des Ausführungsbeispiels

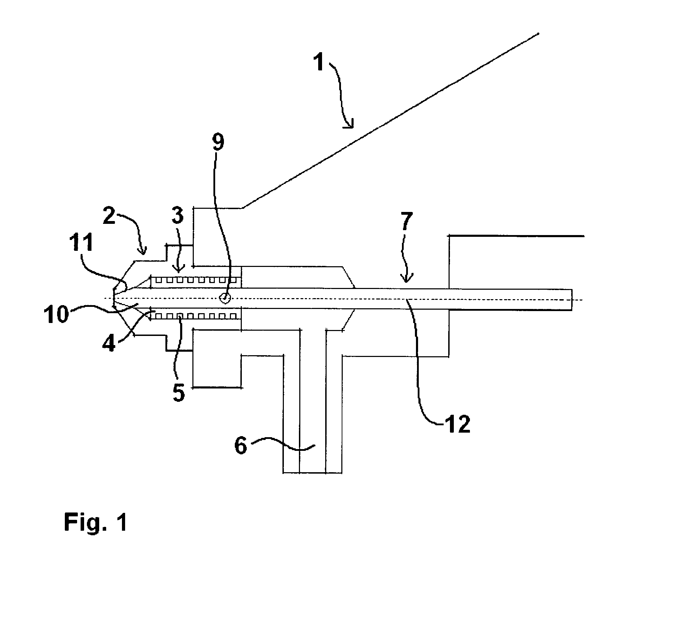

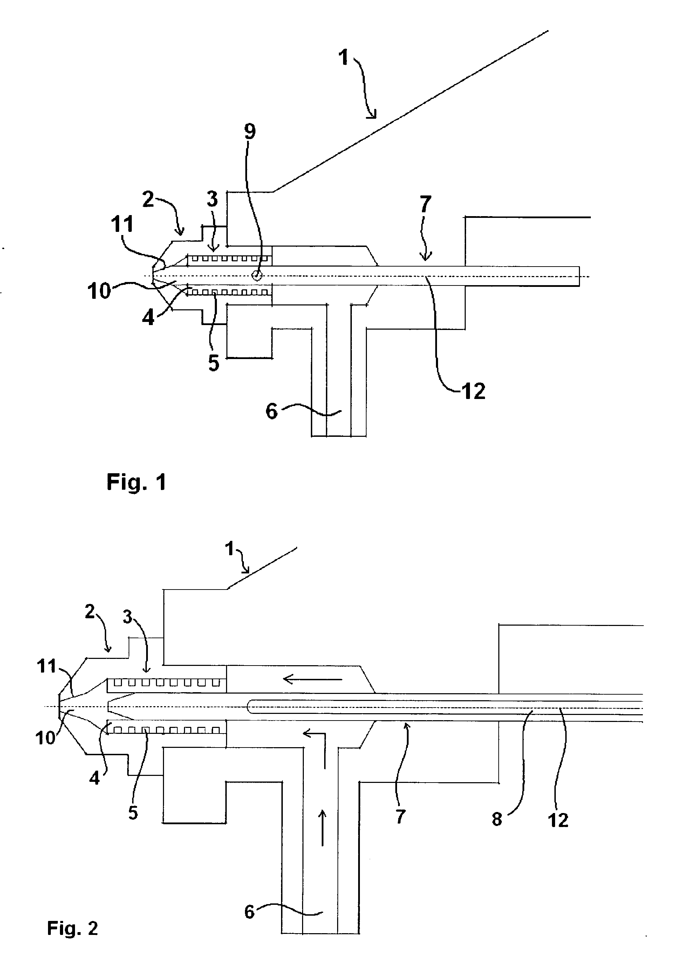

In der Figur 1 ist eine Sprühpistole für das Aufbringen von 2-komponentigen Medien in der Ruheposition dargestellt. Nicht dargestellt sind Reservoire, Bevorratungen und dergleichen für die erste und die zweite Komponente sowie in dem Pistolengehäuse 1 angeordnete Schläuche, Kanäle und Rohre. Die Figur 1 zeigt das Pistolengehäuse 1 der Sprühpistole mit einer an dem Pistolengehäuse 1 angeordneten Auftragsdüse 2. Ein Mischsystem 3, welches als Statikmischer ausgebildet ist, dient zur Vermengung der Komponenten. Das Mischsystem 3 enthält einen Zylinder 4, der als Hohlzylinder ausgebildet ist, mit einer profilierten Einkerbung 5, die fortlaufend wendelartig um die Außenwandung des Zylinders 4 verläuft und als Mischstrecke für die zu mischenden Komponenten dient. Ein Materialkanal 6 in dem Pistolengehäuse 1 ist mit der profilierten Einkerbung 5 verbunden und dient der Leitung der ersten Komponente in das Mischsystem 3. Eine im Pistolengehäuse 1 entlang Ihrer Längsachse verschiebbar geführte Schließnadel 7 ist mit mindestens einem Reaktandenkanal 8 zur Leitung der zweiten Komponente in den Materialkanal ausgestattet. Der Reaktandenkanal 8 ist in Figur 2 abgebildet. In Figur 1 ist eine Auslassöffnung 9 der Schließnadel 7 gezeigt, die zur Entlassung der zweiten Komponente aus dem Reaktandenkanal 8 dient. Die Schließnadel 7 greift mit einem Sitzbereich 10 in einen Nadelsitz 11 der Auftragsdüse 2 ein. Hierdurch wird die Auftragsdüse 2 verschlossen. Darüber hinaus ist die Schließnadel zum Teil in den hohlen Zylinder 4 des Mischsystems 3 eingeführt. Die Auslassöffnung 9 der Schließnadel 7 wird hierbei durch den als Abdeckung dienenden Zylinder 4 vollständig abgedeckt. Die Auslassöffnung 9 ist somit ebenfalls verschlossen. Es findet damit kein Fluss einer zweiten Komponente statt.

Der Fluß der ersten Komponente wird durch das Schließen der Auftragsdüse 2 mittels der Schließnadel 7 unterbrochen. Die Schließnadel 7 hat damit sowohl die Funktion des Verschlusses der Sprühpistole, als auch der Zufuhr und, in Verbindung mit einer Abdeckung, der Dosierung der zweiten Komponente.

In der Figur 2 ist eine erfindungsgemäße Sprühpistole für das Aufbringen von 2-komponentigen Medien in der Arbeitsposition dargestellt. Die Figur 2 unterscheidet sich dadurch von Figur 1, dass die Schließnadel 7 mit Ihrem Sitzbereich 10 aus dem Nadelsitz 11 der Auftragsdüse 2 herausbewegt ist. Die in dem Materialkanal 6 eingezeichneten Pfeile bezeichnen die Flussrichtung der zweiten Komponente im Materialkanal 6. Gleichzeitig ist in Figur 2 im Gegensatz zu Figur 1 die Auslassöffnung 9 des Reaktandenkanals 8 geöffnet, so dass die zweite Komponente in den Materialkanal 6 entlassen wird. Die Auslassöffnung 9 ist in Figur 2 nicht gezeigt; sie ist in Figur 1 dargestellt. In der Arbeitsposition der Sprühpistole werden beide Komponenten aus dem Materialkanal 6 in das Mischsystem 3 mit der profilierten Einkerbung 5 geführt. Eine Verbindung der profilierten Einkerbung 5 des Mischsystems 3 mit der Auftragsdüse 2 dient der Zuleitung des 2-komponentigen Mediums nach Vermengung der Komponenten in die Auftragsdüse 2. Durch die Auftragsdüse p wird das 2-komponentige Medium auf das zu verklebende Werkstück aufgebracht.

Um von der in Figur 1 gezeigten Ruheposition in die in Figur 2 dargestellte Arbeitsposition zu gelangen, wird die Schließnadel 7 in dem Pistolengehäuse 1 entlang ihrer Längsachse 12 aus dem Nadelsitz 11 der Auftragsdüse 2 herausgezogen. Die Schließnadel 7 wird hierbei entlang der Innenwandung des Hohlzylinders 4 geführt, welcher als Teil des Mischsystems 3 ortsfest in dem Pistolengehäuse 1 angeordnet ist.

Sämtliche Merkmale der Erfindung können sowohl einzeln als auch in beliebiger Kombination miteinander erfindungswesentlich sein.

### Bezugszahlen

- 1: Pistolengehäuse
- 2: Auftragsdüse
- 3: Mischsystem
- 4: Zylinder
- 5: profilierte Einkerbung
- 6: Materialkanal
- 7: Schließnadel
- 8: Reaktandenkanal
- 9: Auslassöffnung
- 10: Sitzbereich
- 11: Nadelsitz
- 12: Längsachse der Schließnadel

## Patentansprüche

1. Sprühpistole für das Aufbringen von 2-komponentigen Medien,
mit einem Pistolengehäuse (1),
mit einer Auftragsdüse (2) an dem Pistolengehäuse (1),
mit einem Mischsystem (3) in dem Pistolengehäuse zur Vermengung der Komponenten,
mit einem Materialkanal (6) in dem Pistolengehäuse (1) zur Leitung der ersten Komponente in das Mischsystem (3),
mit einer im Pistolengehäuse (1) entlang ihrer Längsachse verschiebbar geführten Schließnadel (7),
mit mindestens einem Reaktandenkanal (8) der Schließnadel (7) zur Leitung der zweiten Komponente in das Mischsystem (3) und/ oder in den Materialkanal (6),
mit mindestens einer abseits der Längsachse der Schließnadel angeordneten Auslassöffnung (9) des Reaktandenkanals (8) zur Entlassung der zweiten Komponente aus dem Reaktandenkanal (8),
mit mindestens einer Bedieneinrichtung an der Sprühpistole zur Verschiebung der Schließnadel (7) im Pistolengehäuse (1),
mit mindestens einer Dosiereinrichtung an der Sprühpistole zur Änderung des Öffnungsquerschnitts der mindestens einen Auslassöffnung (9) der Schließnadel (7) durch Führung der Schließnadel (7) entlang einer ortsfest in dem Gehäuse (1) angeordneten Abdeckung beim Verschieben der Schließnadel (7).

2. Sprühpistole nach Anspruch 1, **dadurch gekennzeichnet, dass** es sich bei dem Mischsystem (3) um einen Statikmischer handelt.

3. Sprühpistole nach Anspruch 1 oder 2, **dadurch gekennzeichnet, dass** das Mischsystem die Abdeckung aufweist.

4. Sprühpistole nach einem der vorhergehenden Ansprüche, **dadurch gekennzeichnet, dass** die Schließnadel einen Abschnitt mit einem Sitzbereich (10) zum Eingriff in einen als Nadelsitz (11) ausgebildeten Abschnitt der Auftragsdüse (2) aufweist.

5. Sprühpistole nach Anspruch 4, **dadurch gekennzeichnet, dass** die Schließnadel (7) mindestens eine Ruheposition aufweist, in der der Sitzbereich (10) der Schließnadel (7) in den Nadelsitz (11) der Auftragsdüse (2) eingreift und die Auslassöffnung (9) durch die Abdeckung vollständig abgedeckt ist.

6. Sprühpistole nach Anspruch 4, **dadurch gekennzeichnet, dass** die Schließnadel (7) mindestens eine Reinigungsposition aufweist, in der der Sitzbereich (10) der Schließnadel (7) aus dem Nadelsitz (11) herausbewegt ist und die mindestens eine Auslassöffnung (9) durch die Abdeckung vollständig abgedeckt ist.

7. Sprühpistole nach Anspruch 4, **dadurch gekennzeichnet, dass** die Schließnadel (7) mindestens eine Arbeitsposition aufweist, in der der Sitzbereich (10) der Schließnadel (7) durch Verschiebung der Schließnadel (7) aus dem Nadelsitz (11) herausbewegt ist und die Auslassöffnung (9) vollständig oder teilweise von der Abdeckung freigegeben ist.

8. Sprühpistole nach einem der vorhergehenden Ansprüche, **dadurch gekennzeichnet, dass** der Reaktandenkanal (8) durch mindestens eine Absperreinrichtung von einem Vorrat an der zweiten Komponente absperrbar ist.

9. Sprühpistole nach Anspruch 8, **dadurch gekennzeichnet, dass** es sich bei der Absperreinrichtung um ein Rückschlagventil handelt.

10. Verwendung einer Sprühpistole gemäß einem der Ansprüche 1 bis 9 zur Aufbringung eines als Reaktionsprodukt aus einer ersten und einer zweiten Komponente erhaltenen Klebstoffes.

11. Verwendung einer Sprühpistole gemäß Anspruch 10, wobei der Klebstoff ein wasserbasierter Klebstoff ist.

12. Verwendung einer Sprühpistole gemäß Anspruch 11, wobei die erste Komponente eine Polychloropren-Dispersion ist.

13. Verwendung einer Sprühpistole gemäß einem der Ansprüche 10 bis 12, wobei die zweite Komponente ein Aktivator ist.

14. Verwendung einer Sprühpistole gemäß einem der Ansprüche 10 bis 13, wobei die zweite Komponente CO₂ ist.

15. Verwendung einer Sprühpistole gemäß einem der Ansprüche 10 bis 14 zur Verklebung von Schaumstoffen in der Matratzen- und Möbel-/Polsterverklebung.
